# EUROPEAN PATENT SPECIFICATION

(11) **EP 2 224 779 B1**
(45) Date of publication and mention of the grant of the patent: **14.08.2013**
(21) Application number: 09153834.8
(22) Date of filing: 26.02.2009
(51) Int. Cl.: H04W 76/06

(54) **Method and apparatus for conserving battery life and network resources under abnormal call release conditions**
Verfahren und Vorrichtung zur Konservierung der Batterielebensdauer und Netzwerkressourcen unter nicht normalen Anruffreigabevoraussetzungen
Procédé et appareil pour conserver la vie d'une batterie et les ressources d'un réseau dans des conditions de libérations d'appels anormales

(43) Date of publication of application: 01.09.2010
(73) Proprietor: Research In Motion Limited, Waterloo, ON N2L 3W8 (CA)
(72) Inventor: Wijayanathan, Maiyuran, Waterloo Ontario N2V 2X9 (CA); Naqvi, Noushad, Waterloo Ontario N2K 4C1 (CA); Ahmed, Shaik Mohammed Kabeer, Staines, Middlesex TW18 4NX (GB)
(74) Representative: Moore, Barry

(56) References cited:
- EP-A- 1 684 532
- WO-A-2006/059932
- US-A1- 2008 123 527
- US-A1- 2008 304 510

## Description

### FIELD OF THE DISCLOSURE

The present disclosure relates to gateway to core networks such as unlicensed mobile access/generic access networks (UMA/GAN), and in particular relates to voice calls in such networks.

### BACKGROUND

A generic access network (GAN), also known as a unlicensed mobile access (UMA) network, is a telecommunications system allowing handover between local area networks and wide area networks on a dual mode mobile device. The handover is seamless and can be between a cellular network such as a global system for mobile communication (GSM) network and a broadband network or Internet Protocol (IP) access network such as a wireless local area network (WLAN).

One problem with current GAN systems occurs during a mobile to mobile call if one of the mobiles abnormally releases the call. When the abnormal call release occurs, the second mobile device will not know the call has been released and keep network resources open, wasting network resources and battery life on the second mobile device. Abnormal termination may be caused, for example, by the battery being removed from the first mobile device or by the first mobile device going out of network coverage. Other abnormal call termination scenarios are also relevant.

Under the abnormal call termination, the network will eventually realize the call has been terminated and terminate the call with the second mobile device. However the eventual realization takes time, resulting in network resources and mobile device battery life being wasted.

US 2008/0304510 discloses techniques for detecting end of activity and controlling a radio connection. In one design, inputs may be received from at least one application exchanging data with a wireless communication network via a radio connection. Whether to maintain or close the radio connection may be determined based on the inputs from the application(s). In another design, flow preferences may be received from at least one application for data flows. The states of the data flows may be determined based on their flow preferences and inputs from the application(s). A data flow may be determined to be active or inactive based on its flow preference, inputs received from an application for the data flow, activity detected on the data flow, etc. Whether to maintain or close a radio connection may be determined based on the states of the data flows. The radio connection may be closed when all data flows are inactive.

EP 1684532 discloses a telecommunication system optimizing data connections. The system has a servicing node, a gateway node connecting the servicing node to a data network and a control component virtualizing the connection to the data network when the connection is inactive for a predetermined period of time. A connection is virtualized by deleting control information for the connection from the gateway node and storing this control information in the control component.

### SUMMARY

Accordingly, a first embodiment of the invention provides a method as detailed in claim 1. The invention also relates to a mobile device as detailed in claim 11. Further, the invention relates to a gateway as detailed in claim 12. Advantageous embodiments are provided in the dependent claims.

As in described in more detail below, the present disclosure provides for a timer on a mobile device to start upon receipt of the last data packet in a voice call. The timer is reset if a new voice data packet is received. If the timer expires, a message is sent to a call control layer within the mobile device to send a disconnect message to the network. Logic within the call control layer can determine whether the disconnect message should be sent. In one embodiment the timer is part of, or controlled from, the real time transfer protocol (RTP) layer.

The above provides for disconnection from the network earlier than the network determination that an abnormal call termination has occurred. The disconnection saves network resources and battery life on the mobile device.

In one embodiment, the duration of the timer is configured as part of the GAN registration process, allowing each network operator to set the timer to optimize network performance.

An example therefore provides a method for releasing radio resources from a mobile device during a circuit switched call in a gateway to core network comprising: monitoring an inactive period for the circuit switched call to determine if the inactive period exceeds a predetermined threshold; and responsive to a determination that the inactive period has exceeded the predetermined threshold, initiating a disconnection from the gateway to network.

An example further provides a mobile device adapted to release radio resources for a circuit switched call in a gateway to core network comprising: a communications subsystem; a monitoring module adapted to monitor an inactive period for the circuit switched call; and a processor adapted to initiate a disconnection from the gateway to core network if the inactive period exceeds a threshold.

### BRIEF DESCRIPTION OF THE DRAWINGS

The present disclosure will be better understood with reference to the drawings in which:
**Figure 1** is block diagram illustrating a gateway to core network architecture;
**Figure 2** is block diagram showing a protocol stack for a mobile device;
**Figure 3** is a flow diagram of a process in accordance with the present disclosure;
**Figure 4A** is a flow diagram showing the timer value being set from mobile device perspective;
**Figure 4B** is a flow diagram showing the timer value being set from network perspective;
**Figure 5** is a flow diagram showing a network side initiated disconnection;
**Figure 6** is a block diagram of an exemplary mobile device; and
**Figure 7** is a block diagram of a simplified gateway to core network element.

### DESCRIPTION OF PREFERRED EMBODIMENT

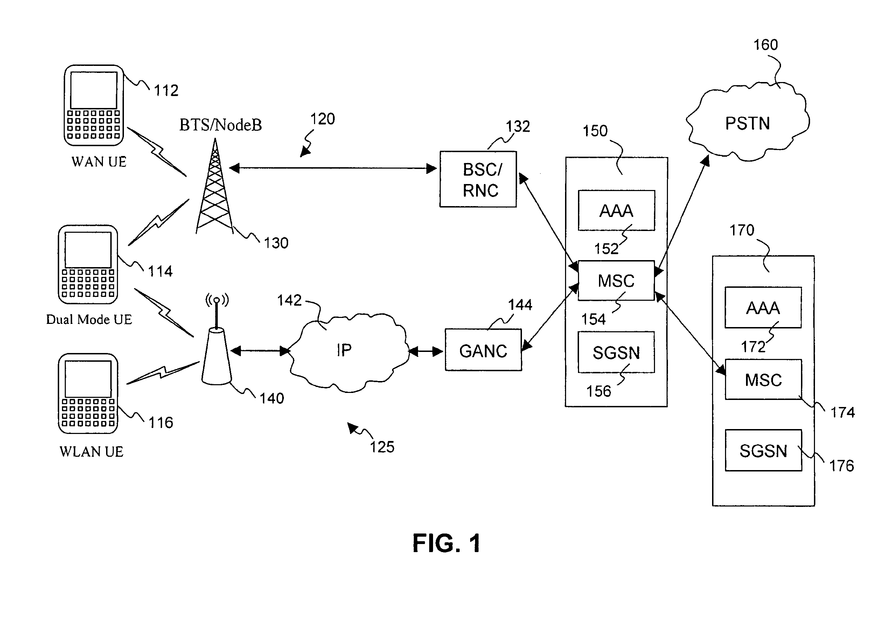

Reference is now made to **Figure 1. Figure 1** illustrates an architectural overview for a gateway to core network. In the example of **Figure 1** the gateway to core network is a GAN network. The present disclosure is not meant to be limited to GAN, however, and GAN is used for illustrative purposes only. Other gateway to core networks could also be used. When used herein, a gateway to core network refers to an unlicensed radio access to a core network though a server such as GANC, and examples of such networks include, but are not limited to, Institute for Electronic and Electrical Engineers (IEEE) 802.11, IEEE 802.16 (WiMAX), ultra wide band (UWB), and Bluetooth^{™}.

Three mobile devices **112, 114** and **116** are illustrated. The mobile devices **112, 114** and **116** can also be referred to as user equipment (UE).

Mobile device **112** is a single mode wide area network mobile device (WAN) which communicates with a cellular network **120.**

Mobile device **116** is a single mode wireless local area network (WLAN) mobile device which communicates with a gateway to core network **125.**

Mobile device **114** is a dual mode device which communicates with both cellular network **120** and WLAN network **125.**

The present disclosure will be described with reference to mobile device **114,** which is a dual mode mobile device, for illustrative purposes.

Mobile device **114** may connect through cellular network **120** to provide either voice or data services. As will be appreciated, various cellular networks exist, including, but not limited to, global system for mobile communication (GSM), general packet radio service (GPRS), code division multiple access (CDMA), universal mobile telecommunications system (UMTS), and wideband code division multiple access (WCDMA), among others. These technologies allow the use of voice, data or both at one time.

Cellular network **120** comprises a base transceiver station (BTS)/Node B **130** which communicates with a base station controller (BSC)/Radio Network Controller (RNC) **132.** BSC/RNC **132** can access the mobile core network **150** through either the mobile switching center (MSC) **154** or the serving GPRS switching node (SGSN) **156.** MSC **154** is utilized for circuit switched calls and SGSN **156** is utilized for data packet transfer. As will be appreciated, these elements are GSM/UMTS specific, but similar elements exist in other types of cellular networks.

Core network **150** further includes an authentication, authorization and accounting module **152** and can further include items such as a home location registry (HLR) or visitor location registry (VLR).

MSC **154** connects to a public switched telephone network (PSTN) **160** for circuit switched calls. Alternatively, for mobile-to-mobile calls the MSC **154** may connect to an MSC **174** of core network **170.** Core network **170** similarly has an authentication, authorization and accounting module **172** and SGSN **176.** MSC **174** could connect to a second mobile device through a base station controller/node B or an access point (not shown). In a further alternative embodiment, MSC **154** may be the MSC for both mobile devices on a mobile-to-mobile call.

In another mode of operation, mobile device **114** communicates over a, for example, gateway to core network access point **140.** Access point **140** could use wireless fidelity (WiFi) or WiMax standards, for example.

In alternative embodiments, instead of WLAN access point **140** a Bluetooth^{™} access point could be used if Bluetooth^{™} is incorporated onto the mobile device and the mobile device is able to communicate with a Bluetooth^{™} access point.

The present disclosure can be utilized with other alternative access schemes which may be employed by multi-mode mobile devices, such as dual mode mobile device **114.**

Utilizing the example of access point **140,** the communication travels over an Internet protocol network **142** to a security gateway/generic access network controller (GANC) **144.** The GANC **144** has similar functionality to BSC/RNC **132** since it allows communications to connect to a carrier's core network **150** and in particular to MSC **154** for circuit switched calls. Routing next proceeds to PSTN **160** as a regular circuit switched call.

The example above utilizing a GANC is merely meant for illustrative purposes. Other access though gateways to the core network are considered to be within the scope of the present disclosure.

The interface between GANC **144** or BSC/RNC **132** and MSC **154** is known as the A/lu-cs interface.

The above system can allow for a mobile device to move seamlessly between a cellular network **120** and a gateway to core network **125** (or any other broadband access network). Low cost WiFi or WLAN access points can therefore be utilized, which are referred to as unlicensed coverage areas.

A problem with the above, however, exists if abnormal call termination occurs for a GAN voice call. Three scenarios which may precipitate such abnormal termination of voice calls are described below.

In a first scenario, a first mobile device, referred to as Mobile A, is an originating call mobile in a GAN network. Mobile B is a terminating point in a GAN call.

If, during the call, the battery is pulled from Mobile A, Mobile B will not realize the call has been terminated for some time. Specifically, practical tests have found that in various networks it may take up to two minutes for the network to send a disconnect message to Mobile B. During the time between the abnormal termination and the disconnect message, the circuit switched call requires dedicated radio resources to be maintained between the network and Mobile B, thereby utilizing battery life on Mobile B and wasting network resources.

A second scenario for abnormal call termination is if a call is made from Mobile A to Mobile B. Subsequently, Mobile A goes out of coverage, which ends the call on Mobile A but again the network does not send a disconnect message to Mobile B for some time. In tests it has been found networks may take up two minutes to send a disconnect message to Mobile B.

Similar tests were repeated with mobiles within GSM coverage and disconnect messages were sent to the mobiles within 20 seconds. The above indicates a considerable deficiency exists for the GAN voice calls.

A third scenario for abnormal call termination occurs when a mobile device sends corrupted packets, resulting in one of two things occurring. The MSC could intercept the corrupted packets, in which case the packet is not forwarded to the receiving mobile device and the receiving mobile device could thus consider the sending mobile has stopped sending packets. Alternatively the MSC could forward the corrupted packets, and thus the mobile would know it is still communicating with the sending mobile device. When packets are intercepted, a disconnect might be appropriate.

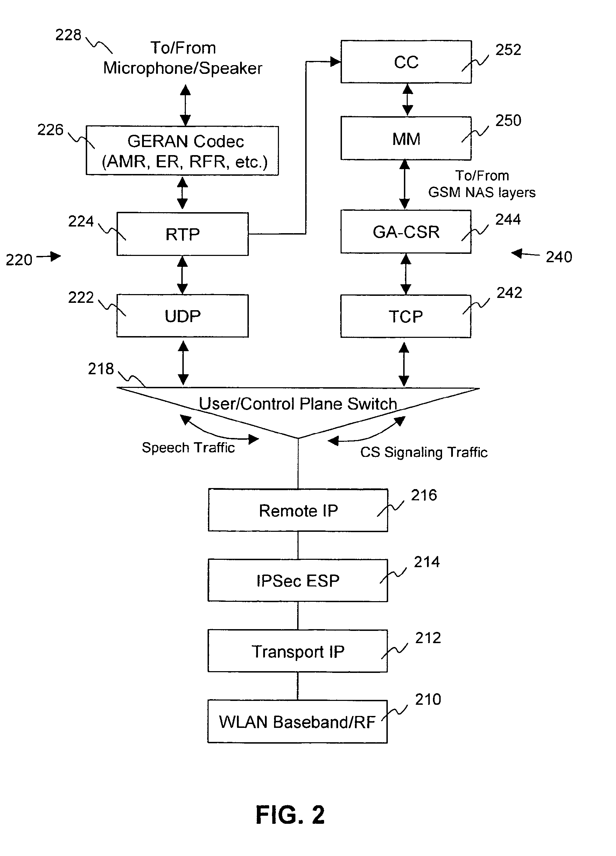

Reference is now made to **Figure 2****,** which illustrates a protocol stack for mobile device in a GAN network.

The physical and transport planes are illustrated using WLAN baseband/radio frequency (RF) layer **210** above which a transport Internet protocol (IP) layer **212** exists.

An Internet protocol security encapsulating security payload (IPSec ESP) layer **214** is above the transport IP layer **212** and provides origin authenticity, integrity and confidentiality protection of packets.

Above the IPSec ESP layer **214** is the remote IP layer **216.**

The protocol stack of **Figure 2** has been divided into a user plane **220** and a control plane **240.** A switch **218** is adapted to send control packets to the control plane and speech packets to the user plane.

In user plane **220,** a user datagram protocol (UDP) layer **222** is adapted to send UDP packets. As will be appreciated by those skilled in the art, there is no confirmation between the user and a sender for UDP packets and no retransmission is utilized. UDP packets are therefore used for items such as speech or real time applications such as video.

Above UDP layer **222,** a real time transfer protocol (RTP) layer **224** is utilized to provide control and synchronization of real time items and to provide time stamps for various packets.

A GSM edge radio access network code/decode (GERAN Codec) layer **226** is adapted to code or decode items from a microphone or speaker for transport over a GAN network utilizing a GSM core network.

Further, as illustrated in **Figure 2****,** packets from the network are converted at GERAN Codec layer **226** and are sent to a speaker. Similarly inputs from a microphone are sent to GERAN Codec layer **226.** The to/from microphone or speaker layer is illustrated by reference numeral **228.**

On control plane **240,** a transmission control protocol (TCP) layer **242** is adapted to transmit and receive packets. In TCP layer **242,** acknowledgments are utilized to ensure that packets arrive and is further adapted to resend packets that have not been acknowledged or which receive a negative acknowledgment.

Above TCP layer **242** is a generic access, circuit switched resource (GA/CSR) layer **244,** which is responsible for radio bearer establishment, paging, and cipher configurations during circuit switched operations.

The GA/CSR layer **244** communicates with non access stratum layers such as a mobility management (MM) layer **250.** Mobility management layer **250** tracks where subscribers are to ensure calls, SMS messages and other services can be delivered. Further, above mobility management layer **250** is a call control layer **252** which is adapted to provide call management signaling for circuit switched services.

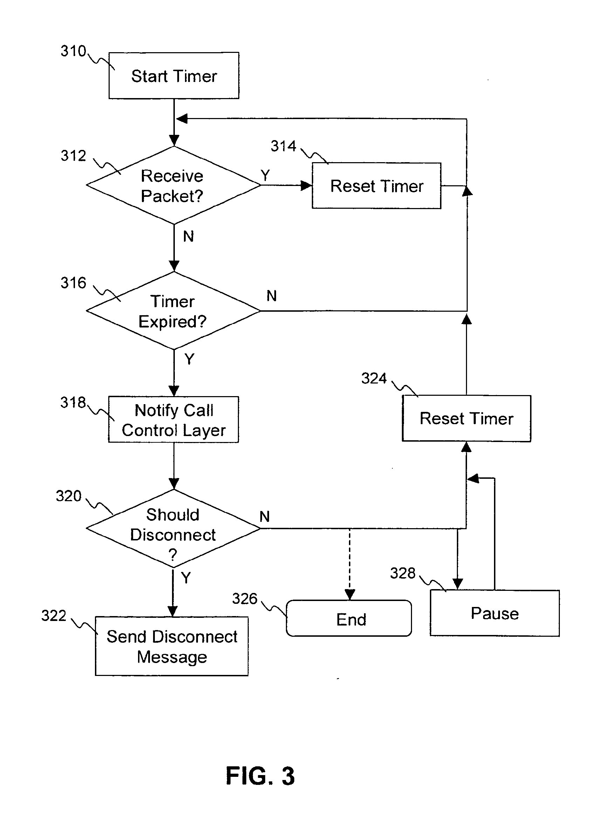

In order to overcome the disadvantages of the prior solutions, the present disclosure provides for the addition of, or control of, a timer in the RTP layer **224.** The timer T is adapted to start when the last speech packet has been received. If the timer expires, RTP layer **224** communicates with the call control layer **252** to indicate that there has been no downlink data for the period provided. The call control layer **252** then can make a decision whether to initiate a disconnect with the network by sending call disconnect signaling to the network. The decision is described in more detail below with reference to **Figure 3****.**

**Figure 3** shows a flow diagram of an exemplary method in accordance with the present disclosure. In particular, the process starts at block **310** in which a timer is started. The timer can be a software or hardware based timer T and the starting of the timer means that the timer starts to count up to a predetermined value or count down from a predetermined value.

The process then proceeds to block **312** in which a check is made to see whether a packet is received. The expected packet is a circuit switched packet and could include, for example, a voice over Internet protocol (VoIP) packet. The RTP layer **224** from **Figure 2** monitors the sending and receiving of packets and can thus control the timer that was started in block **310.** In particular, if a packet is determined to have been received at block **312** then the process proceeds to block **314** in which the timer is reset. The process then proceeds back to block **312** in which a check is made to see whether a packet has been received.

If a packet has not been received, as determined in block **312,** the process proceeds to block **316** in which a check is made to see whether the timer has expired. As indicated above, expiration could result from the timer counting down to zero or counting up to a timer value T, which can be for example 480 ms.

If it is determined in block **316** the timer has not expired, the process proceeds back to block **312** and continues to loop. In particular, the loop between blocks **312** and **316** without resetting of the timer in block **314** provides a determination of an inactive period. If the RTP has detected no packets for a predetermined amount of time T then the process will continue to block **318.** Otherwise, the process will continue to loop between blocks **312, 316** and the resetting of the timer in block **314.**

In block **318** the call control layer is notified that the timer has expired. Notification can be done in various ways. An explicit message could be sent between the RTP layer and the call control layer. Conversely, an interrupt could be triggered by the expiration of the timer, which could be handled by software within the call control layer.

In one embodiment, if the call control layer is notified that the timer has expired the call control layer could automatically send a disconnect message to the network indicating that the mobile device is disconnecting the circuit switched call.

In an alternative embodiment, the process could continue to block **320** in which a determination is made at the call control layer to determine whether disconnect should occur. In particular, the call control layer could know of certain factors and/or know the reason why no packets have been received for the predetermined time period. For example, if the call is on hold the call control layer would be notified and the lack of received packets for a predetermined time period would be explained. The call could also be waiting for the completion of a call waiting action by the other mobile device.

In one embodiment, other supplementary service logic is known to the call control layer and thus the call control layer could decide that a disconnect message should not be sent.

In a further embodiment, block **320** can make a further determination whether certain conditions exist that indicate whether a call should be disconnected. For example, if a call is muted or silent then this determination can be used to prevent disconnection. Moreover, this determination may be used to determine whether there are indicators that the call should be disconnected. Grammar analysis could be utilized for this functionality, for example by determining whether the party has indicated "are you there" or something similar. In the case where the grammar indicates that the other party may not be responding to inquiries regarding the presence of the other party, it might indicate that the call should be disconnected Further, background noise and volume levels could be considered within block **320** for this determination

In a further embodiment, in block **320** a prompt might be provided to a user. In this regard, a user can confirm whether he/she wants to drop the call. The prompt can be a notification or indication to a user that an abnormal call termination by the other mobile has occurred. If a prompt is used, block 320 could either delay until a positive or negative answer is received from a user, in which case the process proceeds to block **322** with a positive answer and block **324** with a negative answer, or the process could proceed to block 324 and store any answer until the process reaches block **320** again, if ever.

If, in block **320,** it is determined that the call should disconnect, the process proceeds to block **322** in which a disconnect message is sent to the network. As will be appreciated by those in the art, the sending of a disconnect message from a mobile device precedes the mobile device actually bringing down the radio resources from its end. In one embodiment, the disconnect message of block **322** is a GA-CSR-UPLINK-DIRECT-TRANSFER message from section 7.2 of the 3GPP TS 44.318 specifications.

If it is determined in block **320** that a call should not be disconnected the process could then proceed to block **324** in which the timer is reset. The process then proceeds to block **312** to continue to monitor whether data has been received.

Alternatively, the process could proceed from block **320** to block **326** if no disconnect message is to be sent. At block **326** the process ends and no longer continues to monitor whether a timer has expired.

In a further alternative, the process could proceed from block **320** to block **328** in which the process is paused until the reason the call should not be disconnected is resolved. Thus the process could, for example, wait until the call is not on hold before resuming the process by proceeding from block **328** to block **324.**

The use of the RTP layer to monitor real time packets for a circuit switched connection provides a good indication of the amount of time that the circuit switched connection has been inactive.

The sending of the disconnect message in block **322** returns the network and the mobile to their idle states, freeing up network resources and also saving the battery resources of the mobile device by removing the need to have a dedicated radio channel and thus requiring a receiver on the mobile device to be on all of the time. The disconnection of the call removes all contexts within the radio access network/core network.

In some embodiments, the value of the timer could be hard coded into the mobile device or could be provisioned to the mobile device. In some cases the value of the timer may also be set by the user.

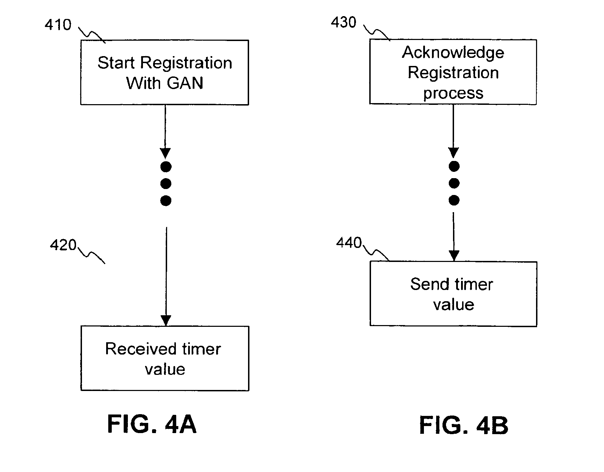

In one embodiment it is useful for the network operator to set the timer value. Reference is now made to **Figure 4****.**

**Figure 4A** shows the registration process from the perspective of a mobile device and **Figure 4B** shows the registration process from the perspective of the network.

Referring to **Figure 4A****,** the registration is started with the GAN at block **410.**

The process then proceeds through the typical registration blocks. However, a block **420** is added in which a timer value is received from the network.

Referring to **Figure 4B****,** the registration process is acknowledged in block 430 and the registration with the mobile device continues as normal. A block **440** is added at the network in which a timer value is sent to the mobile. As will be appreciated, the timer value is the timer value that is received at block **420** of **Figure 4A****.**

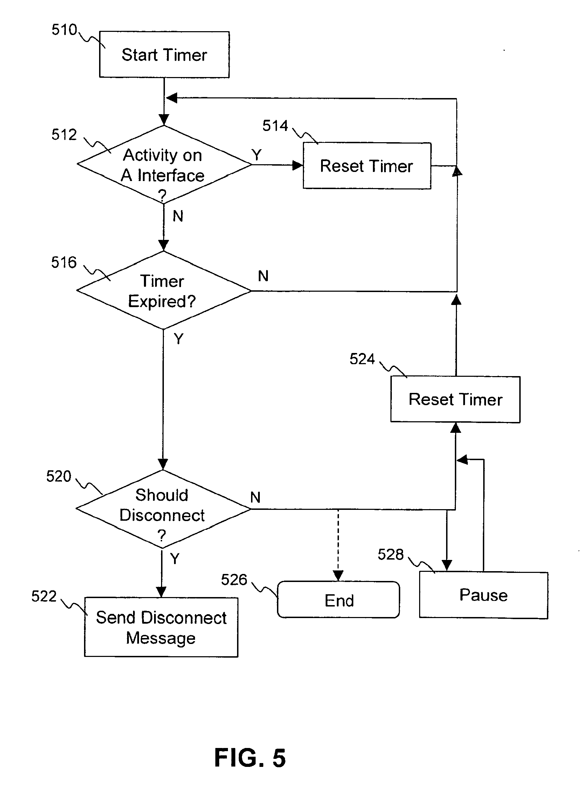

In a further embodiment, the timer may be on a network element. Reference is now made to **Figure 5. Figure 5** shows a network side process for disconnecting a mobile device in abnormal call termination conditions when on a GAN mobile-to-mobile call. The process starts at block **510** in which an inactivity timer is started.

The process then proceeds to block **512** in which a check is made to see whether or not there has been inactivity on a particular interface. In one example, the "A" interface between the GANC and the MSC could be monitored for inactivity. Inactivity on the "A" interface would indicate the same/remote MSC and GANC no longer are communicating with the remote mobile device.

From block **512,** if there is activity on the A interface, the process proceeds to block **514** in which the inactivity timer is reset and the process then continues to loop back to block **512.**

Conversely, in block **512,** if no activity is found on the A interface, the process proceeds to block **516** in which a check is made to determine whether the inactivity timer has expired. If no, the process proceeds back to block **512** and continues to loop as above.

If the timer has expired in block **516** the process proceeds to block **520** in which a check is made to determine whether disconnect should occur. As will be appreciated, in certain situations disconnections should not occur even if there is inactivity on the A interface. For example, if a call is on hold then inactivity could occur on the A interface but the GANC would likely know about the call being on hold.

From block **520,** if disconnection should occur, the process proceeds to block **522** and a disconnect message is sent.

In one embodiment, the disconnect message is a GA-CSR Release message as specified in section 7.5 of the 3GPP TS 44.318 specifications. Specifically, in section 7.5.3 a GA-CSR release is sent from the GANC to the mobile device and a GA-CSR Release Complete is sent from the mobile device to the GANC once the release is complete.

Further, release conditions can be sent from the GANC in the GA-CSR Release message. In one embodiment the release will include an RR cause #1 which indicates an unspecified abnormal release. In other embodiments a particular RR cause could be defined for an inactivity timer time-out.

In a further embodiment, block **520** can make a further determination whether certain conditions exist that indicate whether a call should be disconnected. For example, if a call is muted or silent then this determination can be used to prevent disconnection. Moreover, this determination may be used to determine whether there are indicators that the call should be disconnected. Grammar analysis could be utilized for this functionality, for example by determining whether one party has indicated "are you there" or something similar. In the case where the grammar indicates that one party may not be responding to the other party's inquiries regarding the presence of the other party, it might indicate that the call should be disconnected. Further, background noise and volume levels could be considered within block **520** for this determination.

From block **520,** if a disconnection should not occur, various options exist. These include ending the process at block **526,** pausing the process at block **528** until some condition is met, at which point the process could resume, or resetting the timer at block **524** and continuing back to blocks **512** and **516.**

For both the device side and network side disconnection, the above allows for the timer value to be set by the individual network/operator and thus to optimize performance on the network. The network operator could determine the call should be dropped after, for example, twenty seconds.

In other cases, the network operator may set the timer value T to an extremely high value, which in effect ensures that the timer would never expire. A high timer value could, for example, be utilized if the network operator determines the timeout should only be initiated from the network side rather than the mobile device side.

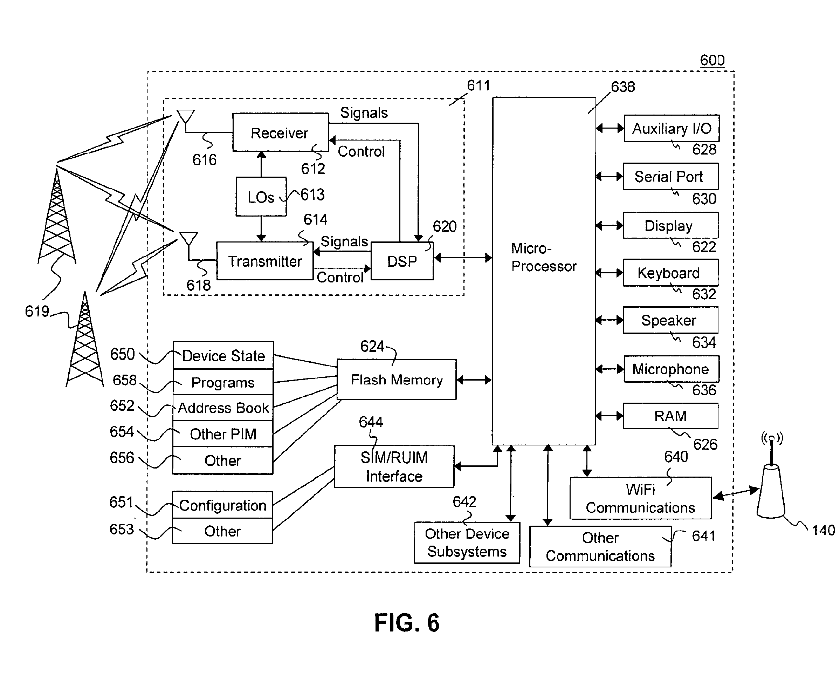

As will be appreciated, the above methods can be implemented on any mobile device. One exemplary mobile device is described below with reference to **Figure 6****.** The use of the mobile device of **Figure 6** is not meant to be limiting, but is provided for illustrative purposes.

**Figure 6** is a block diagram illustrating a mobile device apt to be used with embodiments of the apparatus and method of the present application. Mobile device **600** is a two-way wireless communication device having at least voice communication capabilities. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **600** is enabled for two-way communication, it can incorporate a communication subsystem **611,** including both a receiver **612** and a transmitter **614,** as well as associated components such as one or more, antenna elements **616** and **618,** local oscillators (LOs) **613,** and a processing module such as a digital signal processor (DSP) 620 The particular design of the communication subsystem **611** depends upon the communication network in which the device is intended to operate.

When required network registration or activation procedures have been completed, mobile device **600** may send and receive communication signals over the network **619.** As illustrated in **Figure 6****,** network **619** can comprise of multiple base stations communicating with the mobile device.

Signals received by antenna **616** through communication network **619** are input to receiver **612,** which may perform such common receiver functions as signal amplification, frequency down conversion, filtering, channel selection and the like, and in the example system shown in **Figure 6****,** analog to digital (A/D) conversion. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network **619** via antenna **618.** DSP **620** not only processes communication signals, but also provides for receiver and transmitter control. For example, the gains applied to communication signals in receiver 612 and transmitter 614 may be adaptively controlled through automatic gain control algorithms implemented in DSP 620.

Network access requirements will also vary depending upon the type of network 619. In some CDMA/UMTS networks network access is associated with a subscriber or user of mobile device 600. A mobile device may require a removable user identity module (RUIM) or a subscriber identity module (SIM) card in order to operate on a network. The SIM/RUIM interface 644 is normally similar to a card-slot into which a SIM/RUIM card can be inserted and ejected like a diskette or PCMCIA card. The SIM/RUIM card can have approximately 64K of memory and hold many key configuration 651, and other information 653 such as identification, and subscriber related information.

Mobile device 600 includes a microprocessor 638 which controls the overall operation of the device. Communication functions, including at least data and voice communications, are performed through communication subsystem 611. Microprocessor 638 also interacts with further device subsystems such as the display 622, flash memory 624, random access memory (RAM) 626, auxiliary input/output (I/O) subsystems 628, serial port 630, one or more keyboards or keypads 632, speaker 634, microphone 636, other communication subsystem 640 such as a short-range communications subsystem and any other device subsystems generally designated as 642. Serial port 630 could include a USB port or other port known to those in the art.

Some of the subsystems shown in Figure 6 perform communication-related functions, whereas other subsystems may provide "resident" or on-device functions. Notably, some subsystems, such as keyboard 632 and display 622, for example, may be used for both communication-related functions, such as entering a text message for transmission over a communication network, and device-resident functions such as a calculator or task list.

Operating system software used by the microprocessor 638 can be stored in a persistent store such as flash memory 624, which may instead be a read-only memory (ROM) or similar storage element (not shown). Specific device applications, or parts thereof, may be temporarily loaded into a volatile memory such as RAM **626.** Received communication signals may also be stored in RAM **626.**

As shown, flash memory **624** can be segregated into different areas for both computer programs **658** and program data storage **650, 652, 654** and **656.** These different storage types indicate each program can allocate a portion of flash memory **624** for their own data storage requirements. Microprocessor **638,** in addition to its operating system functions, can enable execution of software applications on the mobile device. A predetermined set of applications which control basic operations, including at least data and voice communication applications for example, will normally be installed on mobile device **600** during manufacturing. Other applications could be installed subsequently or dynamically.

A software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application can have the ability to send and receive data items, via the wireless network **619.** In an embodiment, the PIM data items are seamlessly integrated, synchronized and updated, via the wireless network **619,** with the mobile device user's corresponding data items stored or associated with a host computer system. Further applications may also be loaded onto the mobile device **600** through the network **619,** an auxiliary I/O subsystem **628,** serial port **630,** short-range communications subsystem **640** or any other suitable subsystem **642,** and installed by a user in the RAM **626** or a non-volatile store (not shown) for execution by the microprocessor **638.** Such flexibility in application installation increases the functionality of the device and may provide enhanced on-device functions, communication-related functions, or both.

In a data communication mode, a received signal such as a text message or web page download will be processed by the communication subsystem **611** and input to the microprocessor **638,** which further processes the received signal for element attributes for output to the display **622,** or alternatively to an auxiliary I/O device **628.**

A user of mobile device **600** may also compose data items such as email messages for example, using the keyboard **632,** which can be a complete alphanumeric keyboard or telephone-type keypad, in conjunction with the display **622** and possibly an auxiliary I/O device **628.** Such composed items may then be transmitted over a communication network through the communication subsystem **611.**

For voice communications, overall operation of mobile device **600** is similar, except that received signals would be output to a speaker **634** and signals for transmission would be generated by a microphone **636.** Alternative voice or audio I/O subsystems, such as a voice message recording subsystem, may also be implemented on mobile device **600.** Although voice or audio signal output is accomplished primarily through the speaker **634,** display **622** may also be used to provide an indication of the identity of a calling party, the duration of a voice call, or other voice call related information for example.

Serial port **630** in **Figure 6** would normally be implemented in a personal digital assistant (PDA)-type mobile device for which synchronization with a user's desktop computer (not shown) may be desirable, but is an optional device component. Such a port **630** would enable a user to set preferences through an external device or software application and would extend the capabilities of mobile device **600** by providing for information or software downloads to mobile device **600** other than through a wireless communication network. The alternate download path may for example be used to load an encryption key onto the device through a direct and thus reliable and trusted connection to thereby enable secure device communication. Serial port **630** can further be used to connect the mobile device to a computer to act as a modem.

WiFi Communications Subsystem **640** is used for WiFi Communications and can provide for communication with access point **140,** as described above with reference to **Figure 1****.**

Other communications subsystem(s) **641,** such as a short-range communications subsystem, are further components that may provide for communication between mobile device **600** and different systems or devices, which need not necessarily be similar devices. For example, the subsystem(s) **641** may include an infrared device and associated circuits and components or a Bluetooth™ communication module to provide for communication with similarly enabled systems and devices.

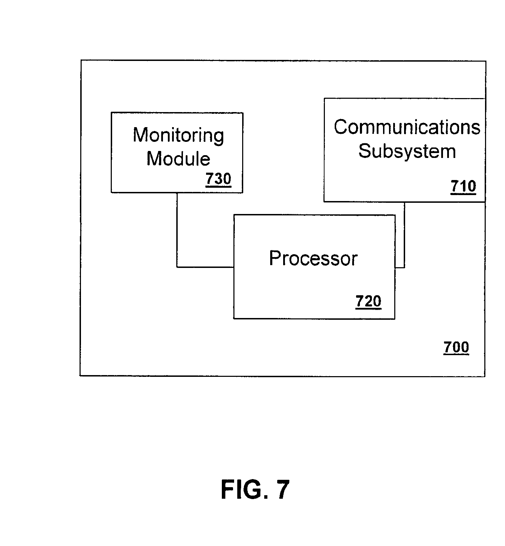

Reference is now made to **Figure 7****,** which shows a simplified block diagram of a gateway to core network element. Such a gateway to core network element could be, for example, GANC **144** of **Figure 1****.**

Gateway to core network element **700** includes a communications subsystem **710** adapted to communicate with other elements within the network. In one embodiment, such communication includes communication with an MSC **154** from **Figure 1****.** It also includes communications over an Internet protocol network **142.**

A processor **720** is adapted to control the network element **700** and a monitoring module **730** is adapted to monitor communications over communications subsystem **710** to determine whether there is inactivity on the communication subsystem. In one embodiment, the monitoring module could monitor the "A" interface on communication subsystem **710** and determine whether or not there is inactivity for a predetermined time, as illustrated with reference to **Figure 5****.** In another embodiment, monitoring module **730** may monitor a keep-alive signal from a first UE that is in a call with a second UE. If monitoring module **730,** alone or in combination with another component of network element **700,** monitors that a keep-alive signal has not been received from the first UE for a pre-determined amount of time, network element **700** can send a disconnect message to the second UE. The second UE can then end the call. The pre-determined amount of time may be set as a time longer than a period of time between keep-alive signals, which in an embodiment may be 480ms.

Various options for the above listed messages include, but are not limited to: a KEEP ALIVE message, as defined in 3GPP 44.318 section 10.1.14; a DISCONNECT message (network to mobile station direction), as defined in 3GPP TS 24.008 section 9.3.7.1; and a DISCONNECT message (mobile station to network direction) as defined in 3GPP 24.008 section 9.3.7.2.

The embodiments described herein are examples of structures, systems or methods having elements corresponding to elements of the techniques of the present application. The above written description may enable those skilled in the art to make and use embodiments having alternative elements that likewise correspond to the elements of the techniques of the present application.

## Claims

1. A method for releasing radio resources during a voice call in a gateway to core network (125) comprising:
monitoring for an inactive period during the call to determine if the inactive period exceeds a predetermined threshold; and
responsive to a determination that the inactive period has exceeded the predetermined threshold, initiating a disconnection of said voice call from the gateway to network (125), by sending a disconnection message from a mobile device (114) to said gateway for use by said network to release the radio resources for the voice call.

2. The method of claim 1, wherein the inactive period is monitored by a timer.

3. The method of claim 2, wherein the timer is implemented in hardware or software on the mobile device (114).

4. The method of claim 2 or claim 3, wherein the monitoring is performed by a real time transport protocol layer (212) on the mobile device (114).

5. The method of claim 4, wherein the real time transport protocol layer (212) is adapted to reset the timer if a circuit switched packet is detected.

6. The method of claim 5, wherein the initiating further comprises tearing down radio resources from the mobile device (114).

7. The method of any one of claims 1 to 6, wherein, prior to the initiating, a determination is made whether to initiate the disconnection, said determination causing the initiating to be skipped if it is determined that a disconnection should not occur.

8. The method of claim 7, wherein the determination is made by a call control layer (252) at the mobile device (114).

9. The method of claim 8, wherein the call control layer (252) utilizes supplementary service logic to make the determination.

10. The method of claim 2, wherein a value for the timer is received from the gateway to core network (125) upon registration of the mobile device (114) with the gateway to core network (125).

11. A mobile device (600) adapted to release radio resources during a voice call in a gateway to core network (700) comprising:
a communications subsystem (710);
a monitoring module (730); and
a processor (720);
wherein the mobile device (600) is configured to perform the steps of the method of any one of claims 1 to 10.

12. A gateway to core network element (700) adapted to release radio resources during a voice call comprising:
a communications subsystem (710);
a monitoring module (730) adapted to monitor an inactive period for the call to determine if the inactive period exceeds a predetermined threshold; and
a processor (720) adapted to initiate a disconnection with a mobile device (600) if the inactive period exceeds the predetermined threshold by sending a disconnection message from said gateway to said mobile device (600).

13. The gateway to core network element (700) of claim 12, wherein the gateway to core network element (700) is a generic access network controller (144).

14. The gateway to core network element (700) of claim 13, wherein the monitoring module (730) is adapted to monitor an A/lu-cs interface.

## Patentansprüche

1. Verfahren zum Freigeben von Funkressourcen während eines Sprachanrufs in einem Gateway zu einem Kernnetz (125) mit:
Überwachen auf einen inaktiven Zeitraum während des Anrufs, um zu bestimmen, ob der inaktive Zeitraum einen vorbestimmten Schwellenwert überschreitet, und
als Reaktion auf ein Bestimmen, dass der inaktive Zeitraum den vorbestimmten Schwellenwert überschritten hat, einem Einleiten einer Trennung des Sprachanrufs vom Gateway zum Netz (125), indem eine Trennnachricht von einer Mobilvorrichtung (114) an das Gateway zur Verwendung durch das Netz gesendet wird, um die Funkressourcen für den Sprachanruffreizugeben.

2. Verfahren nach Anspruch 1, wobei der inaktive Zeitraum von einem Zeitgeber überwacht wird.

3. Verfahren nach Anspruch 2, wobei der Zeitgeber in Hardware oder in Software aufder Mobilvorrichtung (114) implementiert ist.

4. Verfahren nach Anspruch 2 oder 3, wobei die Überwachung von einer Echtzeittransportprotokollschicht (212) auf der Mobilvorrichtung (114) durchgeführt wird.

5. Verfahren nach Anspruch 4, wobei die Echtzeittransportprotokollschicht (212) angepasst wird, um den Zeitgeber neu zu setzen, wenn ein leitungsvermitteltes Paket erfasst wird.

6. Verfahren nach Anspruch 5, wobei das Einleiten ferner ein Abbauen von Funkressourcen von der Mobilvorrichtung (114) aufweist.

7. Verfahren nach einem der Ansprüche 1 bis 6, wobei vor dem Einleiten bestimmt wird, ob die Trennung eingeleitet werden soll, wobei das Bestimmen veranlasst, dass das Einleiten übersprungen wird, wenn bestimmt wird, dass ein Trennen nicht erfolgen soll.

8. Verfahren nach Anspruch 7, wobei das Bestimmen von einer Anrufsteuerungsschicht (252) an der Mobilvorrichtung (114) gemacht wird.

9. Verfahren nach Anspruch 8, wobei die Anrufsteuerungsschicht (252) Zusatzdienstlogik verwendet, um das Bestimmen durchzuführen.

10. Verfahren nach Anspruch 2, wobei ein Wert für den Zeitgeber nach Registrierung der Mobilvorrichtung (114) mit dem Gateway zu einem Kernnetz (125) vom Gateway zum Kernnetz (125) empfangen wird.

11. Mobilvorrichtung (600), die dazu ausgelegt ist, Funkressourcen während eines Sprachanrufs in einem Gateway zu einem Kernnetz (700) freizugeben, mit:
einem Kommunikationsteilsystem (710);
einem Überwachungsmodul (730) und
einem Prozessor (720),
wobei die Mobilvorrichtung (600) dazu konfiguriert ist, die Schritte des Verfahrens nach einem der Ansprüche 1 bis 10 durchzuführen.

12. Gateway zu einem Kernnetzelement (700), das dazu ausgelegt ist, Funkressourcen während eines Sprachanrufs freizugeben, mit:
einem Kommunikationsteilsystem (710),
einem Überwachungsmodul (730), das dazu ausgelegt ist, einen inaktiven Zeitraum für den Anruf zu überwachen, um zu bestimmen, ob der inaktive Zeitraum einen vorbestimmten Schwellenwert überschreitet, und
einem Prozessor (720), der dazu ausgelegt ist, eine Trennung mit der Mobilvorrichtung (600) einzuleiten, wenn der inaktive Zeitraum den vorbestimmten Schwellenwert überschreitet, indem eine Trennnachricht von dem Gateway an die Mobilvorrichtung (600) gesendet wird.

13. Gateway zum Kernnetzelement (700) nach Anspruch 12, wobei das Gateway zum Kernnetzelement (700) ein generischer Zugriffsnetzcontroller (144) ist.

14. Gateway zum Kernnetzelement (700) nach Anspruch 13, wobei das Überwachungsmodul (730) dazu ausgelegt ist, eine A/lu-CS-Schnittstelle zu überwachen.

## Revendications

1. Procédé de libération de ressources radio durant un appel vocal dans une passerelle vers le réseau central (125) comprenant le fait :
de surveiller une période inactive durant l'appel pour déterminer si la période inactive dépasse un seuil prédéterminé ; et
de déclencher, en réponse au fait qu'il a été déterminé que la période inactive a dépassé le seuil prédéterminé, une déconnexion dudit appel vocal de la passerelle vers le réseau (125), en envoyant un message de déconnexion à partir d'un dispositif mobile (114) à ladite passerelle à utiliser par ledit réseau pour libérer les ressources radio durant l'appel vocal.

2. Procédé de la revendication 1, dans lequel la période inactive est surveillée par une minuterie.

3. Procédé de la revendication 2, dans lequel la minuterie est mise en oeuvre dans un équipement matériel ou logiciel sur le dispositif mobile (114).

4. Procédé de la revendication 2 ou 3, dans lequel la surveillance est effectuée par une couche de protocole de transport en temps réel (212) sur le dispositif mobile (114).

5. Procédé de la revendication 4, dans lequel la couche de protocole de transport en temps réel (212) est adaptée pour remettre à zéro la minuterie si un paquet à commutation de circuits est détecté.

6. Procédé de la revendication 5, dans lequel le déclenchement comprend en outre le fait d'éliminer des ressources radio du dispositif mobile (114).

7. Procédé de l'une quelconque des revendications 1 à 6, dans lequel, avant le déclenchement, on détermine s'il faut déclencher la déconnexion, ladite détermination amenant le déclenchement à être ignoré s'il est déterminé qu'une déconnexion ne doit pas se produire.

8. Procédé de la revendication 7, dans lequel la détermination est effectuée par une couche de commande d'appel (252) au niveau du dispositif mobile (114).

9. Procédé de la revendication 8, dans lequel la couche de commande d'appel (252) utilise une logique de service supplémentaire pour effectuer la détermination.

10. Procédé de la revendication 2, dans lequel une valeur pour la minuterie est reçue de la passerelle vers le réseau central (125) lors de l'enregistrement du dispositif mobile (114) avec la passerelle vers le réseau central (125).

11. Dispositif mobile (600) adapté pour libérer des ressources radio durant un appel vocal dans une passerelle vers le réseau central (700) comprenant :
un sous-système de communications (710) ;
un module de surveillance (730) ; et
un processeur (720) ;
où le dispositif mobile (600) est configuré pour effectuer les étapes du procédé de l'une quelconque des revendications 1 à 10.

12. Passerelle vers l'élément de réseau central (700) adaptée pour libérer des ressources radio durant un appel vocal comprenant :
un sous-système de communications (710) ;
un module de surveillance (730) adapté pour surveiller une période inactive durant l'appel pour déterminer si la période inactive dépasse un seuil prédéterminé ; et
un processeur (720) adapté pour déclencher une déconnexion avec un dispositif mobile (600) si la période inactive dépasse le seuil prédéterminé en envoyant un message de déconnexion de ladite passerelle audit dispositif mobile (600).

13. Passerelle vers l'élément de réseau central (700) de la revendication 12, dans lequel la passerelle vers l'élément de réseau central (700) est un contrôleur d'accès mobile sans licence (144).

14. Passerelle vers l'élément de réseau central (700) de la revendication 13, dans lequel le module de surveillance (730) est adapté pour surveiller une interface A/lu-cs.
